# EUROPEAN PATENT APPLICATION

(11) **EP 4 644 199 A1**
(43) Date of publication of application: **05.11.2025**
(21) Application number: 24173745.1
(22) Date of filing: 02.05.2024
(51) Int. Cl.: B60W 10/18, B60W 10/20, B60W 50/023, B60W 50/04

(54) **SECONDARY VEHICLE SYSTEM TEST IN AUTONOMOUS VEHICLE**

(71) Applicant: VOLVO TRUCK CORPORATION, 405 08 Göteborg (SE)
(72) Inventor: RAY, Sidhant, 431 47 MÖLNDAL (SE); SCHOUTISSEN, Simon, 423 46 TORSLANDA (SE); KERAI, Hiren, 417 03 GÖTEBORG (SE); HILLERBORG, Per, 425 65 HISINGS KÄRRA (SE)
(74) Representative: Kransell & Wennborg KB

(57) **Abstract**

A computer system (13) comprising processing circuitry (21) configured to: receive a first vehicle operation command defining a first desired operation of an autonomous vehicle (1); control a primary vehicle system (17) to perform the first desired operation; send a request for testing a secondary vehicle system (19) being a backup of the primary vehicle system (17); receive an indication that a present traffic situation is suitable for testing the secondary vehicle system (19); receive a second vehicle operation command defining a second desired operation of the autonomous vehicle (1); control the secondary vehicle system (19) to perform the second desired operation; receive a third vehicle operation command defining a third desired operation of the autonomous vehicle (1); and control the primary vehicle system (17) to perform the third desired operation.

## Description

### TECHNICAL FIELD

The disclosure relates generally to control of an autonomous vehicle. In particular aspects, the disclosure relates to secondary vehicle system test in an autonomous vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An autonomous vehicle typically has redundant vehicle systems. For instance, a primary vehicle system may normally be used, and, in case malfunction of the primary vehicle system is detected, automatic switch-over to a secondary vehicle system may be performed, so that the autonomous vehicle can continue to operate, at least until the autonomous drive control system can safely bring the vehicle to a standstill at a suitable location.

It would be desirable to provide for improved status determination of a secondary vehicle system.

### SUMMARY

According to a first aspect of the disclosure, there is provided a computer system comprising processing circuitry configured to receive, from an autonomous drive control system, a first vehicle operation command defining a first desired operation of an autonomous vehicle; control a primary vehicle system of the autonomous vehicle to perform the first desired operation; send, to the autonomous drive control system, a request for testing a secondary vehicle system, the secondary vehicle system being a backup of the primary vehicle system; receive, from the autonomous drive control system, an indication that a present traffic situation is suitable for testing the secondary vehicle system; receive, from the autonomous drive control system, a second vehicle operation command defining a second desired operation of the autonomous vehicle; control the secondary vehicle system to perform the second desired operation; receive, from the autonomous drive control system, a third vehicle operation command defining a third desired operation of the autonomous vehicle; and control the primary vehicle system to perform the third desired operation. The first desired operation may be carried out before the second desired operation, which may be carried out before the third desired operation. The first aspect of the disclosure may seek to provide for safe testing of a secondary vehicle system while the autonomous vehicle is carrying out a mission. This may, in turn, provide for improved status determination of a secondary vehicle system, which may provide for improved operation and/or increased availability of the autonomous vehicle comprising the secondary vehicle system.

The "first desired operation" and the "third desired operation" could be any operation while being on a mission. Examples may include, for instance, braking for an intersection or for slower moving traffic, making a turn, or accelerating onto a motorway, etc.

Switching to the secondary vehicle system for performing the second desired operation may be conditional on having received both the indication that the present traffic situation is suitable for testing the secondary vehicle system, and the second vehicle operation command. Furthermore, a condition for switching to the secondary vehicle system for performing the second desired operation may be that second vehicle operation command is received within a predefined time period after having received the indication that the present traffic situation is suitable for testing the secondary vehicle system. Such a condition would be fulfilled in the case that the second vehicle operation command is received before the indication that the present traffic situation is suitable for testing the secondary vehicle system.

The processing circuitry may be configured to determine that the second vehicle operation has been carried out, and then switch back to the primary vehicle system. Alternatively, the processing circuitry may be configured to switch back to the primary vehicle system after a predefined time period.

The indication that the present traffic situation is suitable for testing the secondary vehicle system may simply encode a go-ahead to perform a test. Alternatively, the indication may include additional information about the present traffic situation, allowing the processing circuitry to double-check that the present traffic situation is, in fact, suitable for the intended test. If, for example, a steering test is intended, a suitable traffic situation may be that the vehicle is presently in a traffic-restricted area, such as a loading area with sufficient space. If, for example, a braking test is intended, a suitable traffic situation may be that the vehicle can "see" far behind the vehicle, and that no other vehicles are detected behind the vehicle.

Optionally in some examples, including in at least one preferred example, the request for testing the secondary vehicle system may comprise an indication of a predefined vehicle maneuver. An example of a predefined vehicle maneuver may be to steer the vehicle along a predefined path. Another example of a predefined vehicle maneuver may be to brake the vehicle with a predefined negative acceleration during a predefined time. A technical benefit may include that the predefined vehicle maneuver can be included in the second desired operation, so that both the autonomous drive control system and the vehicle control system can be aware of which vehicle behavior to expect during the requested testing of the secondary vehicle system. Another technical benefit may include that classification of a traffic situation as suitable for carrying out the requested test may be facilitated.

Optionally in some examples, including in at least one preferred example, the processing circuitry may be configured to: evaluate the second vehicle operation command defining the second desired operation of the autonomous vehicle; and control the second vehicle system to perform the second desired operation when the evaluation indicates that the second desired operation includes the predefined vehicle maneuver. For example, the processing circuitry may be configured to control the second vehicle system to perform the second desired operation only when the evaluation indicates that the second desired operation includes the predefined vehicle maneuver. For example, the processing circuitry may be configured to control the second vehicle system to perform the second desired operation only when the evaluation indicates that the second desired operation is identical to the predefined vehicle maneuver. A technical benefit may include that a further check is provided for ensuring that it is a suitable time to test the secondary vehicle system.

Optionally in some examples, including in at least one preferred example, the processing circuitry may be configured to: evaluate the second vehicle operation command defining the second desired operation of the autonomous vehicle; and control the first vehicle system to perform the second desired operation when the evaluation indicates that the second desired operation fails to include the predefined vehicle maneuver. A technical benefit may include that a switch-over to the second vehicle system may be prevented when the expected predefined vehicle maneuver is not included in the second desired operation.

Optionally in some examples, including in at least one preferred example, the primary vehicle system of the autonomous vehicle may be a steering system; and the predefined vehicle maneuver may include steering the autonomous vehicle along a predefined path.

Optionally in some examples, including in at least one preferred example, the primary vehicle system of the autonomous vehicle may be braking system; and the predefined vehicle maneuver may include retarding the autonomous vehicle with a predefined deceleration.

Optionally in some examples, including in at least one preferred example, the processing circuitry may be configured to receive diagnostic data indicative of a performance of the secondary vehicle system. Diagnostic data may, for example, be received from the secondary vehicle system, or from the primary vehicle system, or from a dedicated diagnostics system of the vehicle. The diagnostic data may, for example, include measured parameter values relevant to the secondary vehicle system. A technical benefit may include that the processing circuitry can evaluate whether or not the diagnostic data indicates that the desired test has been performed, and also evaluate the performance of the secondary vehicle system.

Optionally in some examples, including in at least one preferred example, the processing circuitry may be configured to send, to the autonomous drive control system, an indication of the performance of the secondary vehicle system. For example, the indication may indicate whether or not the secondary vehicle system has passed the test. For example, the indication may contain additional data. A technical benefit may include that the indication may allow the autonomous drive control system to drive the vehicle according to a stricter set of rules, and/or to provide status data externally, and/or to bring the vehicle to a controlled stop at a suitable location.

The computer system according to examples of the present disclosure may advantageously be included in a control system for an autonomous vehicle, further comprising: an autonomous drive control system in communication with the computer system of the first aspect, the autonomous drive control system being configured to: send, to the computer system, a first vehicle operation command defining a first desired operation of the autonomous vehicle; receive, from the computer system, a request for testing a secondary vehicle system, the secondary vehicle system being a backup of a primary vehicle system; evaluate the present traffic situation; send, to the computer system, an indication that the present traffic situation is suitable for testing the secondary vehicle system; send, to the computer system, a second vehicle operation command defining a second desired operation of the autonomous vehicle; and send, to the computer system, a third vehicle operation command defining a third desired operation of the autonomous vehicle. The autonomous drive control system may, for example, continuously evaluate the traffic situation. The autonomous drive control system may, for example, evaluate the traffic situation using data received from at least one input device, such as a camera, and/or a radar, and/or a lidar. Map data may also be used.

The control system according to examples of the present disclosure may advantageously be included in a vehicle, further comprising a primary vehicle system; and a secondary vehicle system, being a backup of the primary vehicle system.

According to a second aspect of the disclosure, there is provided a computer-implemented method, comprising: receiving, from an autonomous drive control system, a first vehicle operation command defining a first desired operation of an autonomous vehicle; controlling a primary vehicle system of the autonomous vehicle to perform the first desired operation; sending, to the autonomous drive control system, a request for testing a secondary vehicle system, the secondary vehicle system being a backup of the primary vehicle system; receiving, from the autonomous drive control system, an indication that a present traffic situation is suitable for testing the secondary vehicle system; receiving, from the autonomous drive control system, a second vehicle operation command defining a second desired operation of the autonomous vehicle; controlling the secondary vehicle system to perform the second desired operation; receiving, from the autonomous drive control system, a third vehicle operation command defining a third desired operation of the autonomous vehicle; and controlling the primary vehicle system to perform the third desired operation. The first desired operation may be carried out before the second desired operation, which may be carried out before the third desired operation. The second aspect of the disclosure may seek to provide for safe testing of a secondary vehicle system while the autonomous vehicle is carrying out a mission. This may, in turn, provide for improved status determination of a secondary vehicle system, which may provide for improved operation and/or increased availability of the autonomous vehicle comprising the secondary vehicle system.

The "first desired operation" and the "third desired operation" could be any operation while being on a mission. Examples may include, for instance, braking for an intersection or for slower moving traffic, making a turn, or accelerating onto a motorway, etc.

Switching to the secondary vehicle system for performing the second desired operation may be conditional on having received both the indication that the present traffic situation is suitable for testing the secondary vehicle system, and the second vehicle operation command. Furthermore, a condition for switching to the secondary vehicle system for performing the second desired operation may be that second vehicle operation command is received within a predefined time period after having received the indication that the present traffic situation is suitable for testing the secondary vehicle system. Such a condition would be fulfilled in the case that the second vehicle operation command is received before the indication that the present traffic situation is suitable for testing the secondary vehicle system.

It may be determined that the second vehicle operation has been carried out, and then switched back to the primary vehicle system. Alternatively, the primary vehicle system may be switched back to after a predefined time period.

The indication that the present traffic situation is suitable for testing the secondary vehicle system may simply encode a go-ahead to perform a test. Alternatively, the indication may include additional information about the present traffic situation, allowing a double-check that the present traffic situation is, in fact, suitable for the intended test. If, for example, a steering test is intended, a suitable traffic situation may be that the vehicle is presently in a traffic-restricted area, such as a loading area with sufficient space. If, for example, a braking test is intended, a suitable traffic situation may be that the vehicle can "see" far behind the vehicle, and that no other vehicles are detected behind the vehicle.

Optionally in some examples, including in at least one preferred example, the request for testing the secondary vehicle system may comprise an indication of a predefined vehicle maneuver. An example of a predefined vehicle maneuver may be to steer the vehicle along a predefined path. Another example of a predefined vehicle maneuver may be to brake the vehicle with a predefined negative acceleration during a predefined time. A technical benefit may include that the predefined vehicle maneuver can be included in the second desired operation, so that both the autonomous drive control system and the vehicle control system can be aware of which vehicle behavior to expect during the requested testing of the secondary vehicle system. Another technical benefit may include that classification of a traffic situation as suitable for carrying out the requested test may be facilitated.

Optionally in some examples, including in at least one preferred example, the method may comprise: evaluating the second vehicle operation command defining the second desired operation of the autonomous vehicle; and controlling the second vehicle system to perform the second desired operation when the evaluation indicates that the second desired operation includes the predefined vehicle maneuver. For example, the method may comprise controlling the second vehicle system to perform the second desired operation only when the evaluation indicates that the second desired operation includes the predefined vehicle maneuver. For example, the method may comprise controlling the second vehicle system to perform the second desired operation only when the evaluation indicates that the second desired operation is identical to the predefined vehicle maneuver. A technical benefit may include that a further check is provided for ensuring that it is a suitable time to test the secondary vehicle system.

Optionally in some examples, including in at least one preferred example, the method may comprise: evaluating the second vehicle operation command defining the second desired operation of the autonomous vehicle; and controlling the first vehicle system to perform the second desired operation when the evaluation indicates that the second desired operation fails to include the predefined vehicle maneuver. A technical benefit may include that a switch-over to the second vehicle system may be prevented when the expected predefined vehicle maneuver is not included in the second desired operation.

Optionally in some examples, including in at least one preferred example, the primary vehicle system of the autonomous vehicle may be a steering system; and the predefined vehicle maneuver may include steering the autonomous vehicle along a predefined path.

Optionally in some examples, including in at least one preferred example, the primary vehicle system of the autonomous vehicle may be braking system; and the predefined vehicle maneuver may include retarding the autonomous vehicle with a predefined deceleration.

Optionally in some examples, including in at least one preferred example, the method may comprise receiving diagnostic data indicative of a performance of the secondary vehicle system. Diagnostic data may, for example, be received from the secondary vehicle system, or from the primary vehicle system, or from a dedicated diagnostics system of the vehicle. The diagnostic data may, for example, include measured parameter values relevant to the secondary vehicle system. A technical benefit may include that it can be evaluated whether or not the diagnostic data indicates that the desired test has been performed, and the performance of the secondary vehicle system can also be evaluated.

Optionally in some examples, including in at least one preferred example, the method may comprise sending, to the autonomous drive control system, an indication of the performance of the secondary vehicle system. For example, the indication may indicate whether or not the secondary vehicle system has passed the test. For example, the indication may contain additional data. A technical benefit may include that the indication may allow the autonomous drive control system to drive the vehicle according to a stricter set of rules, and/or to provide status data externally, and/or to bring the vehicle to a controlled stop at a suitable location.

According to a third aspect of the disclosure, there is provided a computer program product comprising program code for performing, when executed by the processing circuitry, the method of the second aspect of the disclosure.

According to a fourth aspect of the disclosure, there is provided a non-transitory computer-readable storage medium comprising instructions, which when executed by the processing circuitry, cause the processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary control system, comprising a computer system according to an example.
**FIG. 3** is an exemplary method according to an example.
**FIG. 4** is an exemplary method according to an example.
**FIG. 5** is an exemplary method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

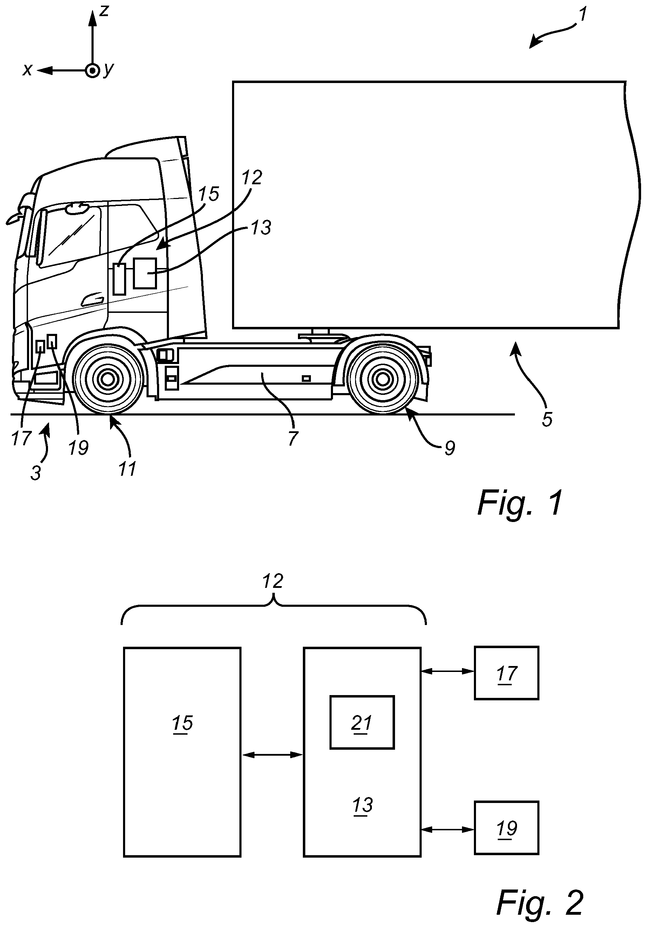

Fig. 1 is an exemplary autonomous vehicle 1 according to an example. Referring to Fig. 1, the exemplary vehicle 1 comprises a first vehicle member 3 and a second vehicle member 5 coupled to the first vehicle member 3. In this example vehicle 1, the first vehicle member 3 is an electric vehicle, here in the form of a battery electric vehicle (BEV) tractor, and the second vehicle member 5 is a semitrailer. It should be noted that the present disclosure is not limited this example vehicle 1, but applies to many other vehicles, such as vehicles comprising a single vehicle member or vehicles including an internal combustion engine, etc.

Referring again to Fig. 1, the first vehicle member 3 has a battery pack 7, and vehicle wheels, represented by one of the rear wheels 9 and one of the front wheels 11 in Fig. 1. As is indicated in Fig. 1, the first vehicle member 3 comprises control system 12 for the autonomous vehicle 1, comprising a computer system 13 for controlling vehicle systems, and an autonomous drive system 15. The autonomous drive system 15 acts as the "driver" of the autonomous vehicle 1, and controls the vehicle 1 via the computer system 13. The computer system 13, in turn, controls a number of vehicle systems that perform vehicle functions. One example of a vehicle system is a steering system of the vehicle 1, and another example is a braking system, etc. To ensure robust functionality of the autonomous vehicle 1, at least some of the vehicle systems have redundancy. This is schematically illustrated in Fig. 1, for an exemplary vehicle function, by the primary vehicle system 17, and the secondary vehicle system 19, which is a backup of the primary vehicle system 17.

Fig. 2 is an exemplary control system 12, comprising a computer system 13 according to an example. Referring to Fig. 2, the control system 12 additionally comprises the above-mentioned autonomous drive control system 15. The computer system 13 comprises processing circuitry 21 configured to communicate with the autonomous drive control system 15, and with the above-mentioned primary vehicle system 17 and secondary vehicle system 19. The processing circuitry 21 of the computer system 13 is configured to receive, from the autonomous drive control system 15, a first vehicle operation command defining a first desired operation of the autonomous vehicle 1, control the primary vehicle system 17 of the autonomous vehicle 1 to perform the first desired operation, send, to the autonomous drive control system 15, a request for testing the secondary vehicle system 19, receive, from the autonomous drive control system 15, an indication that a present traffic situation is suitable for testing the secondary vehicle system 19, receive, from the autonomous drive control system 15, a second vehicle operation command defining a second desired operation of the autonomous vehicle 1, control the secondary vehicle system 19 to perform the second desired operation, receive, from the autonomous drive control system 15, a third vehicle operation command defining a third desired operation of the autonomous vehicle 1, and control the primary vehicle system 17 to perform the third desired operation.

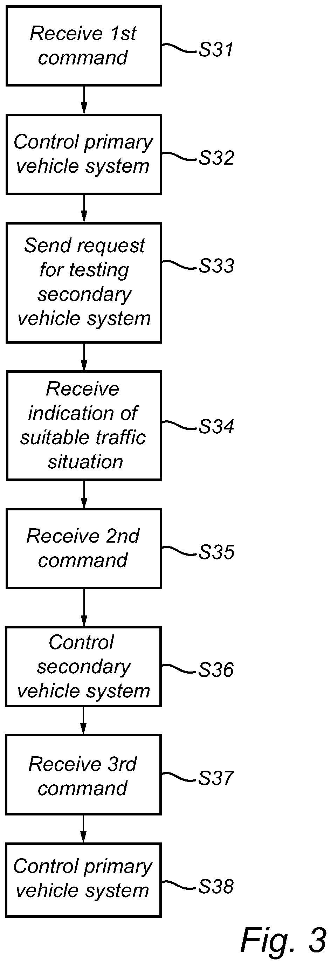

Fig. 3 is an exemplary method according to an example, being carried out while the autonomous vehicle 1 is on a mission, meaning that the vehicle 1 is in traffic situations and under the control of the autonomous drive control system 15. Referring to the flow-chart in Fig. 3, the method first comprises receiving S31, by the processing circuitry 21 of the computer system 13 in Fig. 2, from the autonomous drive control system 15, a first vehicle operation command defining a first desired operation of an autonomous vehicle 1.

Subsequently, the processing circuitry 21 controls S32, the primary vehicle system 17 to perform the first desired operation. Depending on the vehicle system, the first desired operation could be any operation relevant while being on a mission. Examples may include, for instance, braking for an intersection or for slower moving traffic (braking system), making a turn (steering system), or accelerating onto a motorway (propulsion system), etc.

With continued reference to Fig. 3, the processing circuitry 21 of the computer system 13 then sends S33, to the autonomous drive control system 15, a request for testing the secondary vehicle system 19, which is a backup of the primary vehicle system 17. According to an example, the request may include or encode a specific predefined vehicle maneuver that should be used for testing the secondary vehicle system 19.

After having received this request, the autonomous drive control system 15 may start to evaluate the traffic situation, using available sensing means, such as cameras, radars, lidar, etc., to determine whether or not the traffic situation is suitable for testing the secondary vehicle system 19. When the request includes or encodes a specific predefined vehicle maneuver, this may involve to determine whether or not the traffic situation is suitable for carrying out this specific vehicle maneuver.

In the next step, the processing circuitry 21 of the computer system 13 may thus be receiving S34, from the autonomous drive control system 15, an indication that a present traffic situation is suitable for testing the secondary vehicle system 19. Together with this indication, or separately, the processing circuitry 21 may also receive S35, from the autonomous drive control system 15, a second vehicle operation command defining a second desired operation of the autonomous vehicle 1. The time window during which the present traffic situation can be said to be suitable for testing the secondary vehicle system 19 may depend on the second desired operation and the test to be carried out. Therefore, the second vehicle operation command may need to be received within a predefined time from receiving the indication that the present traffic situation is suitable. For example, the second vehicle operation command may be received before the indication that the present traffic situation is suitable.

When it has been indicated that the present traffic situation is suitable for performing the test of the secondary vehicle system 19, and the second vehicle operation command has been received, the method proceeds by controlling S36 the secondary vehicle system 19 to perform the second desired operation.

Subsequently, a third vehicle operation command defining a third desired operation of the autonomous vehicle 1 is received S37, by the processing circuitry 21 of the computer system 13, from the autonomous drive control system 15, and the primary vehicle system 17 is controlled S38 to perform the third desired operation.

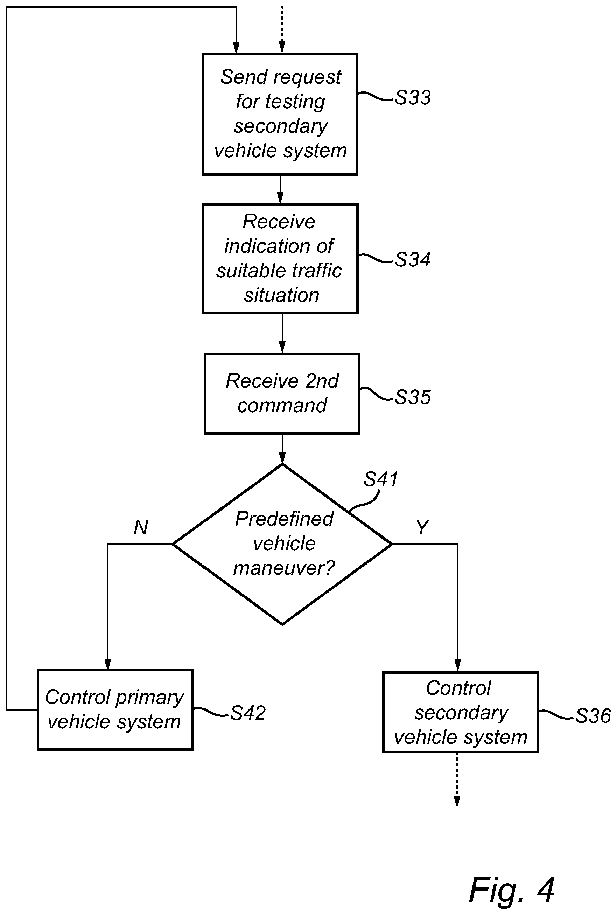

Fig. 4 is an exemplary method according to an example, which differs from the method described above with reference to Fig. 3, in that additional steps have been inserted between S35 and S36 as is indicated in Fig. 4. Thus, with reference to Fig. 4, after having received S35 the second command defining the second desired operation of the autonomous vehicle 1, the processing circuitry 21 of the computer system 13 may evaluate S41 the second vehicle operation to determine whether or not the second command encodes a predefined vehicle maneuver, such as a predefined vehicle maneuver that may have been specified by the request sent in step S33 for testing the secondary vehicle system 19. If the evaluation in step S41 indicates that the second command encodes the predefined vehicle maneuver, the method according to the present example may proceed to control S36 the secondary vehicle system 19 to perform the second desired operation (i.e. the predefined maneuver), as described further above with reference to Fig. 3.

If the evaluation in step S41 indicates that the second command does not encode the predefined vehicle maneuver, but another vehicle maneuver, the method according to the present example may proceed to control S42 the primary vehicle system 17 to perform the second desired operation (i.e. another maneuver than the predefined maneuver). Since the evaluation in step S41 indicated an unexpected vehicle maneuver, the method may return to step S33 and resend, to the autonomous drive control system 15, the request for testing the secondary vehicle system 19.

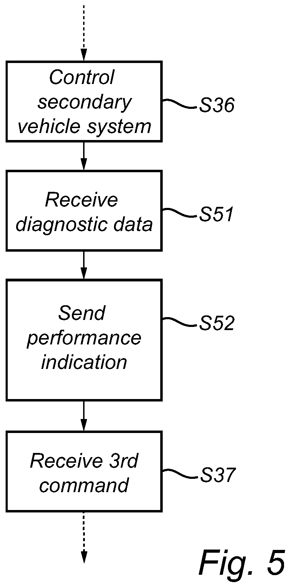

Fig. 5 is an exemplary method according to an example, which differs from the methods described above with reference to Fig. 3 and Fig. 4, in that additional steps have been inserted between S36 and S37 as is indicated in Fig. 5. Thus, with reference to Fig. 5 , after having controlled S36 the secondary vehicle system 19 to perform the second desired operation, or while controlling S36 the secondary vehicle system 19 to perform the second desired operation, the processing circuitry 21 of the computer system 13 may receive S51 diagnostic data relevant to the functionality of the secondary vehicle system 19. The processing circuitry 21 may then send S52 an indication of the performance of the secondary vehicle system 19 to the autonomous drive control system 15. The indication may be determined by the processing circuitry 21 based on the diagnostic data, and/or diagnostic data may be forwarded to the autonomous drive control system 15 as the indication of the performance. This may depend on the complexity of the diagnostic data.

Thereafter, the method according to the present example may proceed to receive S37, from the autonomous drive control system 15, the third vehicle operation command defining the third desired operation of the autonomous vehicle 1, which may depend on the indication of the performance of the secondary vehicle system 19. If it is indicated that the secondary vehicle system 19 functions as intended, the third desired operation may simply be related to the continued performance of the present mission of the autonomous vehicle 1. If, on the other hand, it is indicated that the secondary vehicle system 19 does not function as intended, the third desired operation may be influenced by this finding. For instance, the speed of the vehicle 1 may be limited and/or the vehicle 1 may be controlled to a suitable location and brought to a stop.

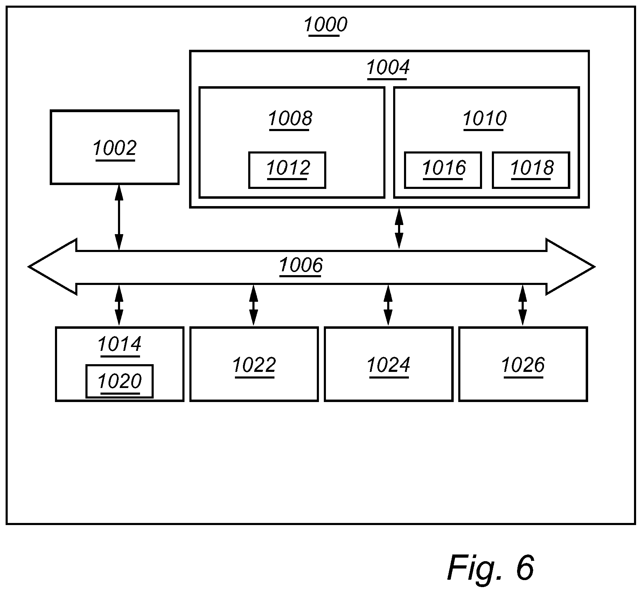

Fig. 6 is a schematic diagram of a computer system 1000 for implementing examples disclosed herein, such as for implementing examples of the computer system 13 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (13) comprising processing circuitry (21) configured to:
receive, from an autonomous drive control system (15), a first vehicle operation command defining a first desired operation of an autonomous vehicle (1);
control a primary vehicle system (17) of the autonomous vehicle (1) to perform the first desired operation;
send, to the autonomous drive control system (15), a request for testing a secondary vehicle system (19), the secondary vehicle system (19) being a backup of the primary vehicle system (17);
receive, from the autonomous drive control system (15), an indication that a present traffic situation is suitable for testing the secondary vehicle system (19);
receive, from the autonomous drive control system (15), a second vehicle operation command defining a second desired operation of the autonomous vehicle (1);
control the secondary vehicle system (19) to perform the second desired operation;
receive, from the autonomous drive control system (15), a third vehicle operation command defining a third desired operation of the autonomous vehicle (1); and
control the primary vehicle system (17) to perform the third desired operation.

2. The computer system (13) of claim 1, wherein the request for testing the secondary vehicle system (19) comprises an indication of a predefined vehicle maneuver.

3. The computer system (13) of claim 2, wherein the processing circuitry (21) is configured to:
evaluate the second vehicle operation command defining the second desired operation of the autonomous vehicle (1); and
control the second vehicle system (19) to perform the second desired operation when the evaluation indicates that the second desired operation includes the predefined vehicle maneuver.

4. The computer system (13) of claim 2 or 3, wherein the processing circuitry (21) is configured to:
evaluate the second vehicle operation command defining the second desired operation of the autonomous vehicle (1); and
control the first vehicle system (17) to perform the second desired operation when the evaluation indicates that the second desired operation fails to include the predefined vehicle maneuver.

5. The computer system (13) of any of claims 2 to 4, wherein:
the primary vehicle system (17) of the autonomous vehicle (1) is a steering system; and
the predefined vehicle maneuver includes steering the autonomous vehicle (1) along a predefined path.

6. The computer system (13) of any of claims 2 to 4, wherein:
the primary vehicle system (17) of the autonomous vehicle (1) is a braking system; and
the predefined vehicle maneuver includes retarding the autonomous vehicle (1) with a predefined deceleration.

7. The computer system (13) of any of claims 1 to 6, wherein the processing circuitry (21) is configured to:
receive diagnostic data indicative of a performance of the secondary vehicle system (19).

8. The computer system (13) of claim 7, wherein the processing circuitry (21) is configured to:
send, to the autonomous drive control system (15), an indication of the performance of the secondary vehicle system (19).

9. A control system (12) for an autonomous vehicle (1), comprising:
the computer system (13) of any of claims 1-8; and
an autonomous drive control system (15) in communication with the computer system (13) of any of claims 1-8, the autonomous drive control system (15) being configured to:
send, to the computer system (13), a first vehicle operation command defining a first desired operation of the autonomous vehicle (1);
receive, from the computer system (13), a request for testing a secondary vehicle system (19), the secondary vehicle system (19) being a backup of a primary vehicle system (17);
evaluate the present traffic situation;
send, to the computer system (13), an indication that the present traffic situation is suitable for testing the secondary vehicle system (19);
send, to the computer system (13), a second vehicle operation command defining a second desired operation of the autonomous vehicle (1); and
send, to the computer system (13), a third vehicle operation command defining a third desired operation of the autonomous vehicle (1).

10. A vehicle (1), comprising:
a primary vehicle system (17);
a secondary vehicle system (19), being a backup of the primary vehicle system (17); and
the control system (12) of claim 9.

11. A computer-implemented method, comprising:
receiving (S31), from an autonomous drive control system (15), a first vehicle operation command defining a first desired operation of an autonomous vehicle (1);
controlling (S32) a primary vehicle system (17) of the autonomous vehicle (1) to perform the first desired operation;
sending (S33), to the autonomous drive control system (15), a request for testing a secondary vehicle system (19), the secondary vehicle system (19) being a backup of the primary vehicle system (17);
receiving (S34), from the autonomous drive control system (15), an indication that a present traffic situation is suitable for testing the secondary vehicle system (19);
receiving (S35), from the autonomous drive control system (15), a second vehicle operation command defining a second desired operation of the autonomous vehicle (1);
controlling (S36) the secondary vehicle system (19) to perform the second desired operation;
receiving (S37), from the autonomous drive control system (15), a third vehicle operation command defining a third desired operation of the autonomous vehicle (1); and
controlling (S38) the primary vehicle system (17) to perform the third desired operation.

12. The method of claim 11, wherein the request for testing the secondary vehicle system (19) comprises an indication of a predefined vehicle maneuver.

13. The method of claim 11 or 12, comprising:
receiving diagnostic data indicative of a performance of the secondary vehicle system (19); and
sending, to the autonomous drive control system (15), an indication of the performance of the secondary vehicle system (19).

14. A computer program product comprising program code for performing, when executed by the processing circuitry (21) comprised in the computer system (13) of any one of claims 1-7, the method of any of claims 11-13.

15. A non-transitory computer-readable storage medium comprising instructions, which when executed by the processing circuitry (21) comprised in the computer system (13) of any one of claims 1-7, cause the processing circuitry (21) to perform the method of any of claim 11-13.
